Europäisches Patentamt

European Patent Office

Office européen des brevets

(11) Veröffentlichungsnummer: **0 318 761 B1**

# EUROPÄISCHE PATENTSCHRIFT

(45) Veröffentlichungstag der Patentschrift: **08.07.92**

(21) Anmeldenummer: **88119095.3**

(22) Anmeldetag: **17.11.88**

Teilanmeldung 91118837.3 eingereicht am 17/11/88.

(51) Int. Cl.⁵: **D06F 23/02**, D06F 35/00

(54) **Verfahren zum Betreiben einer Trommelwaschmaschine und dazu geeignete Trommelwaschmaschine.**

(30) Priorität: **04.12.87 DE 3741177**

(43) Veröffentlichungstag der Anmeldung:
**07.06.89 Patentblatt 89/23**

(45) Bekanntmachung des Hinweises auf die Patenterteilung:
**08.07.92 Patentblatt 92/28**

(84) Benannte Vertragsstaaten:
**DE ES FR IT**

(56) Entgegenhaltungen:
**EP-A- 0 245 721**
**DE-A- 1 610 132**
**FR-A- 1 299 679**
**FR-A- 2 548 699**

(73) Patentinhaber: **Bosch-Siemens Hausgeräte GmbH Patent- und Vertragswesen Hochstrasse 17 Postfach 10 02 50 W-8000 München 80(DE)**

(72) Erfinder: **Uszkureit, Detlef Schottmüller Strasse 14 W-1000 Berlin 37(DE)**

## Beschreibung

Die Erfindung betrifft ein Verfahren zum Betreiben einer Trommelwaschmaschine und eine Trommelwaschmaschine dafür mit einer horizontal drehbar gelagerten Wäschetrommel mit gelochtem Trommelmantel und mit darin angeordneten Mitnehmern, die zu ihrem Innenraum hin offene Schöpfvorrichtungen aufweisen, und mit einem automatisch gesteuerten Waschprogramm, das einen Benetzungsabschnitt mit einer Trommeldrehzahl von höchstens 30 min⁻¹, einen Klarwäscheabschnitt mit einer Trommeldrehzahl von höchstens 60 min⁻¹, einen Spülabschnitt und einen Schleuderabschnitt aufweist.

Eine solche Trommelwaschmaschine ist aus der DE-OS 37 12 118 bekannt. Sie wird in einer Benetzungsphase vorzugsweise mit einer Wäschetrommel-Drehzahl von 27 min⁻¹ kontinuierlich betrieben. Dadurch konnte gegenüber Trommelwaschmaschinen, deren Trommel auch während der Benetzungsphase mit der üblichen Waschdrehzahl von beispielsweise 55 min⁻¹ betrieben wird, die Benetzung der Wäsche so stark intensiviert werden, daß die Wäsche auch bei geringstmöglichem Wasserstand kurz oberhalb des unteren Scheitelpunktes der Wäschetrommel in verhältnismäßig kurzer Zeit homogen durchfeuchtet ist.

Offenbar scheinen Fachleute jedoch mit den Benetzungs- und Reinigungsergebnissen der Wäsche in Trommelwaschmaschinen nicht uneingeschränkt zufrieden zu sein, so daß am Markt befindliche Trommelwaschmaschinen bereits mit einer versteckt angeordneten Einrichtung zum Erhöhen des Wasserstandes versehen ist. Hierdurch wird jedoch der ursprünglich angestrebte Spareffekt in Bezug auf die eingesetzte Wasser- und Energiemenge wieder aufgegeben.

Der Erfindung liegt daher die Aufgabe zugrunde, eine Trommelwaschmaschine der bekannten Art derart zu betreiben, daß die Wäsche auch bei sehr geringem Wasserstand mit absoluter Sicherheit und in kürzester Zeit homogen benetzt wird.

Die Aufgabe wird dadurch gelöst, daß die Trommel während des Benetzungsabschnitts mit höchstens 30 %, vorzugsweise 25 %, Einschaltdauer intervallartig angetrieben wird. Überraschenderweise hat sich nämlich gezeigt, daß nicht allein der in der DE-OS 37 12 118 beschriebene Beregnungseffekt für die homogene Durchfeuchtung der Wäsche verantwortlich ist, sondern daß bei Ruhepausen der Wäsche zwischen Trommel-Drehintervallen die auf die Wäsche geregnete Lauge während eines Sickervorganges die Wäsche noch intensiver benetzen kann.

Dabei kann es von Vorteil sein, daß gemäß einer Weiterbildung des erfindungsgemäßen Verfahrens die Trommel während des Benetzungsabschnitts abwechselnd in Schöpfdrehrichtung und in Entleerungsdrehrichtung angetrieben wird. Abgesehen von der möglichen Vereinfachung der Steuerung einer solchen Trommelwaschmaschine, die dieselbe Steuerungseinrichtung für die Trommeldrehung während des Benetzungsabschnitts wie während des Klarwäscheabschnitts verwenden kann, entsteht durch den Wechsel der Trommel-Drehrichtung ein Pumpeffekt der Lauge innerhalb des Laugenbehälters und der Wäschetrommel und eine solche Umschichtung der Wäsche, daß bei anschließendem Schöpf- und Beregnungsvorgang wieder trockene Wäscheteile sich dem Laugenregen aussetzen.

Eine Weiterbildung des erfindungsgemäßen Verfahrens bevorzugt die Einschaltdauer während eines Intervalls des Trommelantriebs mit etwa 4 s und die Stillstanddauer der Trommel mit etwa 12 s. 4 s Laufdauer der Trommel fördern genügend Lauge über die Wäsche, die während 12 s Trommel-Stillstand von der Lauge durchsickert wird.

Von besonderem Vorteil ist eine Weiterbildung des Verfahrens, bei der der Trommelantrieb während des Benetzungsabschnitts erstmals nach Erreichen eines Laugenniveaus eingeschaltet wird, bei dem die Schöpfvorrichtungen gerade in die Lauge eintauchen. Hierdurch kann verhindert werden, daß die noch nicht benetzte Wäsche zu lange trocken in der Trommel umhergeschichtet wird und dabei einem erhöhten Abrieb unterliegt.

Vorteilhafterweise ist der Benetzungsabschnitt des erfindungsgemäßen Verfahrens maximal 3 min lang. Innerhalb dieser Zeit kann eine volle Wäschebeladung von beispielsweise 4,5 kg homogen durchfeuchtet werden.

In einer Trommelwaschmaschine zur Durchführung des erfindungsgemäßen Verfahrens können die Schöpfvorrichtungen aller Mitnehmer in eine gemeinsame Schöpfrichtung weisen. Dies vereinfacht den Aufbau der Wäschetrommel und ist dann besonders gut geeignet, wenn durch weniger aufwendige Steuerungsmittel die gewünschte Wirkung erreicht werden soll.

In einer anderen Trommelwaschmaschine zur Durchführung des erfindungsgemäßen Verfahrens konnte es als vorteilhaft erkannt werden, daß jeder Mitnehmer mindestens zwei gegeneinander abgedichtete Kammern unterschiedlicher Volumina enthält und ihre zugeordneten Schöpfvorrichtungen in unterschiedliche Schöpfdrehrichtungen weisen. Hierdurch kann unter Anwendung von wenigen unterschiedlichen Drehrhythmen eine Vielzahl von Benetzungswirkungen erzielt werden.

Bei derartig asymmetrich gestalteten Schöpfvorrichtungen ist auch eine Trommelwaschmaschine vorteilhaft, bei der die Wäschetrommel während des Benetzungsabschnitts nur in Schöpfdrehrichtung betreibbar ist. Dann kann während des Betriebs der Trommel von beispielsweise nur 4 s Dauer noch sehr viel geschöpftes Wasser über die Wäsche abregnen, während bei Stillstand der Trommel das Wasser durch die Wäsche sickert. Ein Reversierbetrieb ist hier entbehrlich.

Eine besondere Ausbildung der erfindungsgemäßen Trommelwaschmaschine ergibt sich durch die Gestaltung der Mitnehmer in Form eines Satteldaches, wobei die Dachfläche auf der Seite der Schöpfvorrichtung ungelocht, die andere Dachfläche dagegen im Bereich der Dachspitze gelocht und im Bereich des Dachfußes ungelocht ist. Eine solche Form der Mitnehmer hat sich als besonders gut geeignet für die Schöpfwirkung und die Beregnung der Wäsche erwiesen.

Anhand der in der Zeichnung dargestellten Ausführungsbeispiele ist das erfindungsgemäße Verfahren und eine danach arbeitende Trommelwaschmaschine nachstehend erläutert. Es zeigen:

Fig. 1
eine schematische, aufgebrochene Darstellung des Laugenbehälters und der Trommel einer Trommelwaschmaschine,

Fig. 2 bis Fig. 4
je eine Draufsicht und eine Schnittdarstellung für drei verschiedene Ausführungsformen von Mitnehmern der Wäschetrommel,

Fig. 5 und Fig. 6
zwei Betriebsphasen einer Wäschetrommel mit einer bevorzugten Art von Wäschemitnehmern.

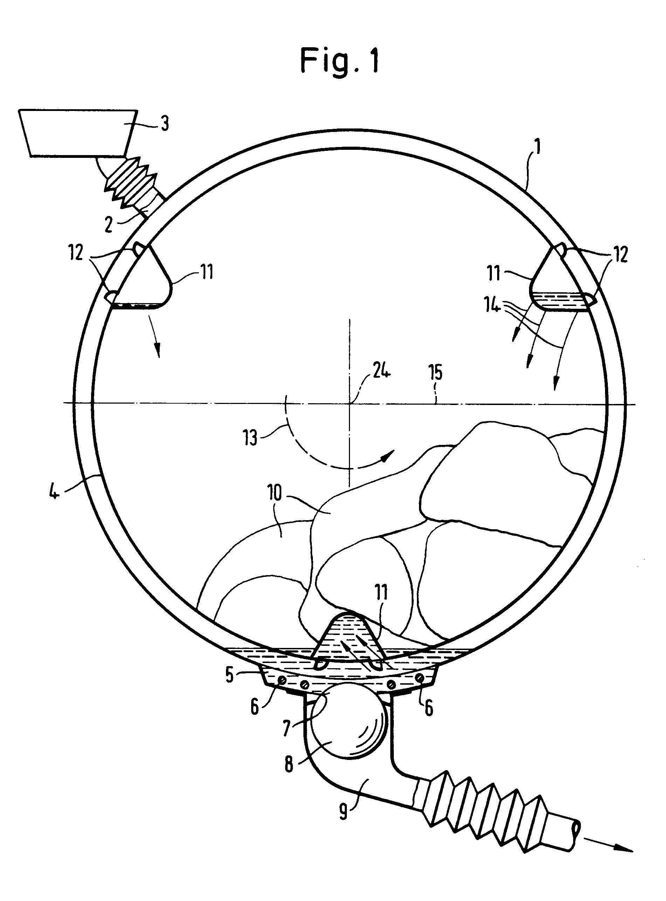

Der Laugenbehälter 1 in Fig. 1 enthält in seinem oberen Bereich eine Einfüllöffnung 2 für aus einer Waschmittel-Einspülvorrichtung 3 zusammen mit Zulaufwasser eingeführtes Waschmittel.

Der Boden des in möglichst geringem Abstand zur Trommel 4 gehaltenen Laugenbehälters 1 hat eine Vertiefung 5, in der die zum Erwärmen der Lauge nötigen Heizkörper 6 angeordnet sind. An der tiefsten Stelle der Vertiefung 5 ist eine Auslauföffnung 7 angebracht, die durch einen Verschlußkörper 8 verschlossen gehalten wird, solange eine nicht dargestellte Laugenpumpe an der Abflußleitung 9 nicht saugt. Dieser Verschlußkörper 8 hat die Aufgabe, den Raum unterhalb der Abflußöffnung 7 solange verschlossen zu halten, wie sich zum Waschen der Wäsche benötigtes Waschmittel innerhalb des Laugenbehälters befindet.

Im zunehmenden Bestreben, zum Waschen immer weniger Wasser und Waschmittel einzusetzen, hat sich in der jüngsten Zeit die zum Waschen erforderliche Wassermenge so sehr verringert, daß die Wäschetrommel 4 nur noch geringfügig in die am Boden des Laugenbehälters 1 befindliche Lauge eintaucht. Hierdurch entsteht jedoch eine neuartige, durch die Trommelwaschmaschine der DE-OS 37 12 118 teilweise bereits behobene Schwierigkeit: Die am Boden der Wäschetrommel 1 lagernde Wäsche 10 kommt bei Trommelwaschmaschinen ohne Schöpfeinrichtungen in nicht mehr ausreichendem Maße in Berührung mit der Lauge, so daß die Wäsche nur noch äußerst langsam und sehr unvollständig benetzt wird. Eine ausreichende Waschwirkung kann bei derartigen Trommelwaschmaschinen mit extrem niedrigen Wasserständen daher auch dann nicht erreicht werden, wenn während der Benetzungsphase die Trommeldrehzahl auf einen Wert (z.B. 30 min$^{-1}$) unterhalb der Waschdrehzahl (z.B. 50 min$^{-1}$) reduziert wird.

Die aus der DE-OS 37 12 188 bekannte Trommelwaschmaschine hat daher am Umfang im Bereich der Mitnehmer 11 Schöpfvorrichtungen 12, die beim Drehen der Trommel, z.B. in Richtung des Pfeiles 13, aus dem in der Vertiefung 5 stehenden Laugenvorrat den jeweiligen Zwischenspeicherraum, hier den Mitnehmer 11, füllen können. Während der Aufwärtsbewegung des Mitnehmers wird diese geschöpfte Wassermenge zunächst zwischengespeichert und über Auslaßöffnungen in dem Zwischenspeicherraum erst in den Trommelinnenraum abgegeben, wenn der Zwischenspeicherraum eine gewisse Höhe im Bereich unter oder über der waagerechten Trommelachse 15, vorzugsweise aber über der in der Trommel 4 liegenden, vollständig benetzten Wäsche 10, erreicht hat. Durch die Pfeile 14 ist angedeutet, in welcher Weise das derartig hochgehobene Wasser über die Wäsche 10 regnet.

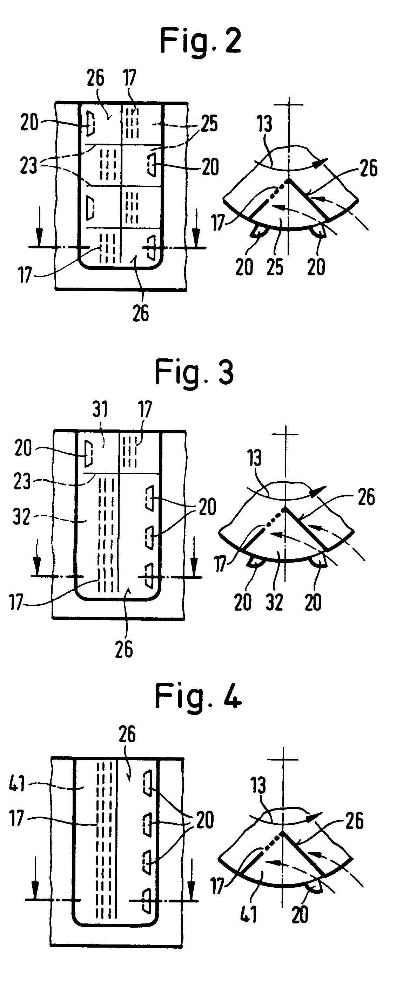

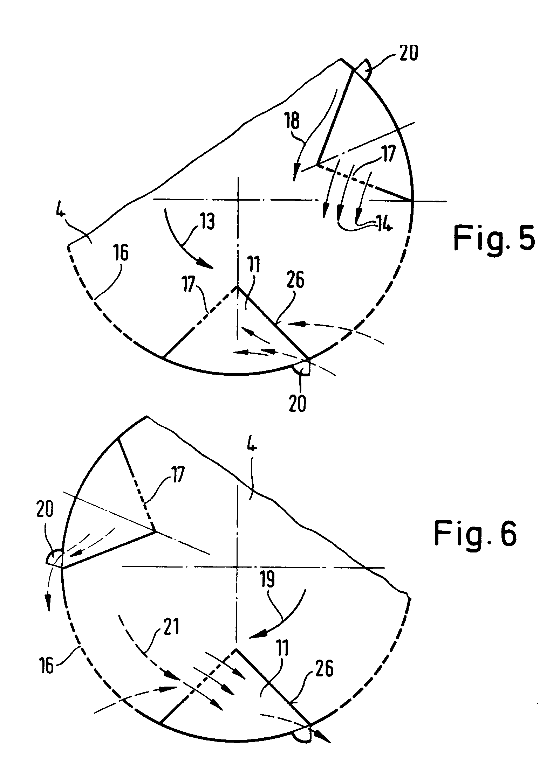

Die Mitnehmer 11 können gemäß Fig. 2 durch Schottwände 23 in mehrere gleich große Kammern 25 unterteilt sein. Hierin sind sie sich den Mitnehmern in Fig. 6 der DE-OS 37 12 118 ähnlich. Die entlang dem Mitnehmer verteilten Kammern 25 haben wiederum ähnlich dem bekannten Mitnehmer abwechselnd in die eine und in die andere Drehrichtung weisende Schöpflöffel 20 als Schöpfvorrichtungen für die Mitnehmer. Im Gegensatz sum bekannten Mitnehmer hat der dachförmige Teil des Mitnehmers jedoch lediglich auf der dem Schöpflöffel 20 gegenüberliegenden Dachfläche Flutlöcher 17, durch die emporgehobene Lauge abgeregnet werden kann. Die Flutlöcher sind in dieser jeweils einen Dachfläche aber nur in der Nähe der Dachspitze angeordnet, damit sich im Raumwinkel am Fuße dieser Dachfläche zum Emporheben genügend Lauge ansammeln kann. In der durch den Pfeil 13 angedeuteten Schöpfdrehrichtung schöpft der rechte Schöpflöffel 20 Lauge in die Kammer 25.

Gleichzeitig dringt auch Lauge durch die bekanntermaßen im Trommelmantel zwischen den Mitnehmern angeordnete Lochung gegen die Außenseite der ungelochten Dachfläche (siehe gestrichelte Pfeile) und wird vom Mitnehmer soweit angehoben, bis sie über die Dachspitze von oben auf die Wäsche herabfließt. Dies geschieht bereits, bevor die Kammer 25 ihren Inhalt durch die Flutlöcher 17 abregnet. Daher wird die Wäsche bereits während einer 1/3-Trommeldrehung durch einen einzigen Mitnehmer an unterschiedlichen Teilen benetzt.

Bei einer Dauer des Benetzungsabschnitts von 3 min einer Einschaltdauer von 30 % und einer Trommeldrehzahl von 30 min$^{-1}$ wird die Wäsche 81 mal auf diese Weise benetzt. Hieraus erkennt man bereits die hohe Effektivität der Laugenzuführung zur Wäsche.

Der Mitnehmer gemäß Fig. 3 enthält nur zwei Kammern 31 und 32, die ungleich groß sind. Hierdurch ergibt sich eine Vorzugsschöpfrichtung, deren Vorteile weiter unten beschrieben werden.

Fig. 4 zeigt einen Mitnehmer mit nur einer einzigen Kammer 41, deren Schöpflöffel nur in eine Richtung gerichtet sind. Entsprechend kann diese Kammer nur in einer Drehrichtung schöpfen.

Die der jeweiligen Drehrichtung abgewandten Schöpflöffel 20 und zugeordneten Kammern aller Ausführungsbeispiele von Mitnehmern pumpen Lauge wieder aus der Wäschetrommel ab und fördern sie in den Zwischenraum zwischen Trommel und Laugenbehälter. Dadurch wird der Austausch zwischen der in der Wäsche befindlichen Lauge und der freien Lauge gefördert. Hieraus resultiert eine bessere Waschwirkung, weil von der Wäsche abgelöster Schmutz schneller aus der Wäsche herausgespült werden kann.

Die in Fig. 5 dargestellte Wäschetrommel dreht sich gemäß Pfeil 13 in Schöpfdrehrichtung. Dabei schöpfen einerseits die Schöpflöffel 20 Lauge aus dem Laugenbehälter in den Mitnehmer 11 und andererseits die Flutlöcher 16 ebenfalls aus dem Zwischenraum zwischen der Trommel 4 und dem Laugenbehälter Lauge auf die ungelochten Dachflächen 26 der Mitnehmer 11. An dem weiter oben befindlichen Mitnehmer ist zu erkennen, daß gemäß dem Pfeil 18 geschöpfte Lauge von der Außenseite der Dachfläche 26 auf die unten liegende (in Fig. 5 und 6 nicht dargestellt) Wäsche fließt und kurze Zeit darauf ebenfalls geschöpfte Lauge durch die Flutlöcher 17 gemäß der Pfeile 14 aus dem Mitnehmer 11 auf die Wäsche regnet. Hieraus ist daher erkennbar, daß der Benetzungseffekt größer ist als beim Gegenstand der DE-OS 37 12 118.

Die in Fig. 6 dargestellte Wäschetrommel dreht sich gemäß Pfeil 19 in Entleerungsdrehrichtung. Hierbei saugt der nach hinten offene, durch die Lauge am Boden des Laugenbehälters streichende Schöpflöffel 20 aus dem Innenraum des Mitnehmers 11 Lauge an, die durch die Flutlöcher 17 aus dem Innenraum der Trommel nachströmen muß. Diese Lauge stammt im wesentlichen gemäß Pfeil 21 aus der feuchten Wäsche und wird bei Trommeldrehzahlen bis zu etwa 60 min$^{-1}$ auch durch die Flutlöcher 16 im Trommelmantel aus dem Zwischenraum zwischen Trommel und Laugenbehälter gesaugt. Bei darüber liegenden Drehzahlen überwiegt jedoch die Zentrifugalkraft, so daß Feuchtigkeit nur aus dem Trommelinneren angesaugt wird.

Während des Benetzungsabschnitts wird gemäß dem erfindungsgemäßen Verfahren die Wäschetrommel mit höchstens 30 % Einschaltdauer intervallartig angetrieben. Wäschetrommeln, deren Mitnehmer gemäß Fig. 2 und 3 gestaltet sind, können reversierend angetrieben werden.

Bei Mitnehmern gemäß Fig. 2, bei denen die Volumina der jeder Drehrichtung zugeordneten Kammern gleich groß sind, kann der Reversierrhythmus ebenfalls gleichmäßig verteilt sein, z.B. 3 s Linkslauf, 9 s Pause, 3 s Rechtslauf und 9 s Pause. Dabei ergeben sich insgesamt 24 s für ein Intervall und 25 % Einschaltdauer.

Bei Mitnehmern gemäß Fig. 3, bei denen die Volumina der jeder Drehrichtung zugeordneten Kammern 31 und 32 ungleich groß sind, hier z.B. 3x V31 = V32, kann der Reversierrhythmus umgekehrt proportional verteilt sein, damit bei jedem Schöpfvorgang der Wäsche die gleiche Beregnungsmenge zugeführt wird, z.B. 3 s Linkslauf, 14 s Pause, 9 s Rechtslauf, 14 s Pause. Dabei ergeben sich insgesamt 40 s für ein Intervall und 30 % Einschaltdauer.

Wäschetrommeln, deren Mitnehmer nur eine Kammer 41 mit in einer Drehrichtung wirkendem Schöpflöffel 20 gemäß Fig. 4 aufweisen, werden im Benetzungsabschnitt zweckmäßigerweise auch nur in dieser einen Drehrichtung betrieben. Beispielsweise kann die Wäschetrommel in jedem Intervall 5 s lang laufen und 15 s lang stehen, das ist eine Einschaltdauer von 25 %.

Während der Stillstandzeiten der Wäschetrommel sickert die abgeregnete Lauge langsam in Schwerkraftrichtung durch die Wäsche, ehe die Wäsche in der anschließenden Laufphase wider umgeschichtet wird.

Während des Klarwäscheabschnitts wird die Wäschetrommel anders als im Benetzungsabschnitt angetrieben. Da es hier nicht mehr auf eine optimale Benetzung sondern auf eine optimale mechanische Behandlung der Wäsche ankommt, wird die Wäschetrommel während des Klarwäscheabschnitts - außer zur Behandlung von empfindlicher Wäsche wie Wolle - mit einer üblichen Trommeldrehzahl angetrieben, z.B. 55 min$^{-1}$.

Außerdem kann der Klarwäscheabschnitt gemäß Fig. 7 in Wasch-Schleuderphasen WSP und Reversierphasen RP unterteilt sein. In den Wasch-Schleuderphasen wird die Wäschetrommel in Entleerungsrichtung aus dem Stillstand beschleunigt, bis beispielsweise eine Drehzahl von 300 min$^{-1}$ erreicht ist. Dieser Vorgang dauert etwa 10 s. Der Schleuderanlauf kann auch zeitlich begrenzt sein; dann wird die erreichte Enddrehzahl durch die Beladung der Wäschetrommel bestimmt. Sie wird möglicherweise zwischen 150 min$^{-1}$ und 350 min$^{-1}$ variieren.

**Patentansprüche**

1. Verfahren zum Betreiben einer Trommelwaschmaschine mit einer horizontal drehbar gelagerten Wäschetrommel mit gelochtem Trommelmantel und mit darin angeordneten Mitnehmern, die zu ihrem Innenraum hin offene Schöpfvorrichtungen aufweisen, und mit einem automatisch gesteuerten Waschprogramm, das einen Benetzungsabschnitt mit einer Trommeldrehzahl von höchstens etwa 30 min$^{-1}$, einen Klarwäscheabschnitt von höchstens etwa 60 min$^{-1}$, einen Spülabschnitt und einen Schleuderabschnitt aufweist, **dadurch gekennzeichnet,** daß die Trommel während des Benetzungsabschnitts mit höchstens 30 %, vorzugsweise 25 %, Einschaltdauer intervallartig angetrieben wird.

2. Verfahren nach Anspruch 1, dadurch gekennzeichnet, daß die Trommel während des Benetzungsabschnitts abwechselnd in Schöpfdrehrichtung (S) und in Entleerungsdrehrichtung (E) angetrieben wird.

3. Verfahren nach Anspruch 1 oder 2, dadurch gekennzeichnet, daß die Einschaltdauer während eines Intervalls des Trommelantriebs etwa 4 s und die Stillstanddauer etwa 12 s beträgt.

4. Verfahren nach einem der Ansprüche 1 bis 3, dadurch gekennzeichnet, daß der Trommelantrieb während des Benetzungsabschnitts erstmals nach Erreichen eines Laugenniveaus (RNiv) eingeschaltet wird, bei dem die Schöpfvorrichtungen (20) gerade in die Lauge eintauchen.

5. Verfahren nach einem der Ansprüche 1 bis 4, dadurch gekennzeichnet, daß der Benetzungsabschnitt maximal 3 min dauert.

6. Trommelwaschmaschine zur Durchführung des Verfahrens nach Anspruch 1 oder 1 und 3 oder 4, dadurch gekennzeichnet, daß die Schöpfvorrichtungen (20) aller Mitnehmer (11) in eine gemeinsame Schöpfdrehrichtung (13) weisen.

7. Trommelwaschmaschine zur Durchführung des Verfahrens nach Anspruch 1 und 2, dadurch gekennzeichnet, daß jeder Mitnehmer (11) mindestens zwei gegeneinander abgedichtete Kammern (31, 32) unterschiedlicher Volumina enthält und ihre zugeordneten Schöpfvorrichtungen (20) in unterschiedliche Schöpfdrehrichtungen weisen.

8. Trommelwaschmaschine nach Anspruch 6, dadurch gekennzeichnet, daß die Wäschetrommel (4) während des Benetzungsabschnitts nur in Schöpfdrehrichtung (S, 13) betreibbar ist.

9. Trommelwaschmaschine nach einem der Ansprüche 5 bis 8, dadurch gekennzeichnet, daß die Mitnehmer (11) satteldachförmig gestaltet sind und die Dachfläche (26) auf der Seite der Schöpfvorrichtung (20) ungelocht, die andere Dachfläche dagegen im Bereich der Dachspitze gelocht (Flutlöcher 17) und im Bereich des Dachfußes ungelocht ist.

**Claims**

1. Method of operating a drum washing machine with a horizontal, rotatably mounted laundry drum with apertured drum shell and entraining elements which are arranged therein and which have scoop devices open towards its interior space, and with an automatically controlled washing program which has a wetting section with a drum rotational speed of at most about 30 minutes$^{-1}$, a clear washing section of at most about 60 minutes$^{-1}$, a rinsing section and a spin section, characterised thereby that during the wetting section the drum is periodically driven with at most 30%, preferably 25%, switch-on time.

2. Method according to claim 1, characterised thereby that during the wetting section the drum is driven alternately in scoop rotational direction (S) and in emptying rotational direction (E).

3. Method according to claim 1 or claim 2, characterised thereby that the switch-on time during a period of the drum drive amounts to about 4 seconds and the standstill time to about 12 seconds.

4. Method according to one of claims 1 to 3, characterised thereby that during the wetting section the drum drive is switched-on for the first time after attainment of a liquor level (RNiv) at which the scoop devices (20) dip directly into the liquor.

5. Method according to one of the claims 1 to 4, characterised thereby that the wetting section lasts at most 3 minutes.

6. Drum washing machine for carrying out the method according to claim 1 or 1 and 3 or 4, characterised thereby that the scoop devices (20) of all entraining elements (11) point in a common scoop rotational direction (13).

7. Drum washing machine for carrying-out the method according to claim 1 and 2, characterised thereby that each entraining element (11) contains at least two chambers (31, 32) of different volume sealed relative to one another and its associated scoop devices (20) point in different scoop rotational directions.

8. Drum washing machine according to claim 6, characterised thereby that during the wetting section the laundry drum (4) is drivable only in scoop rotational direction (S, 13).

9. Drum washing machine according to one of claims 5 to 18, characterised thereby that the entraining elements (11) are saddleroof-shaped and the roof surface (26) is unapertured on the side of the scoop device (20), whereagainst the other roof surface is apertured in the region of the roof crest (flood holes 17) and unapertured in the region of the roof eave.

**Revendications**

1. Procédé d'exploitation d'un lave-linge à tambour comportant un tambour à linge horizontal, mobile en rotation, muni d'une paroi de tambour perforée et d'entraîneurs qui sont disposés dans la paroi du tambour et présentent des systèmes d'écope ouverts en direction du volume intérieur des entraîneurs, ainsi qu'un programme de lavage à commande automatique qui comporte une séquence de mouillage avec une vitesse de rotation maximale du tambour d'environ 30 min$^{-1}$, une séquence de lavage avec une vitesse de rotation maximale du tambour d'environ 60 min$^{-1}$, une séquence de rinçage et une séquence d'essorage, caractérisé par le fait que le tambour est entraîné par intervalles avec une durée de mise en circuit de 30% maximum, de préférence de 25%, pendant la séquence de mouillage.

2. Procédé selon la revendication 1, caractérisé par le fait que, pendant la phase de mouillage, le tambour est entraîné alternativement dans le sens de rotation correspondant au puisage (S) et dans le sens de rotation correspondant au vidage (E).

3. Procédé selon la revendication 1 ou 2, caractérisé par le fait que la durée de mise en circuit pendant un intervalle de l'entraînement du tambour représente environ 4 s et le temps d'arrêt environ 12s.

4. Procédé selon l'une des revendications 1 à 3, caractérisé par le fait que l'entraînement du tambour pendant la séquence de mouillage n'est mis en circuit qu'à partir du moment où un niveau de lessive (RNiv), pour lequel les systèmes d'écope (20) plongent dans la lessive, est atteint.

5. Procédé selon l'une des revendications 1 à 4, caractérisé par le fait que la séquence de mouillage dure 3 minutes maximum.

6. Lave-linge à tambour pour la mise en oeuvre du procédé selon revendication 1, ou 1 et 3 ou 4, caractérisé par le fait que les systèmes d'écope (20) de tous les entraîneurs sont orientés dans un même sens de rotation (13) pour le puisage.

7. Lave-linge à tambour pour la mise en oeuvre du procédé selon revendication 1 et 2, caractérisé par le fait que chaque entraîneur (11) comporte au moins deux chambres (31, 32) de volume différent qui sont séparées de manière étanche et les entraîneurs (20) associés sont tournés dans des sens de rotation différents pour le puisage.

8. Lave-linge à tambour selon revendication 6, caractérisé par le fait que le tambour à linge (4) n'est entraîné que dans un sens de rotation correspondant au puisage (S, 13) pendant la séquence de mouillage.

9. Lave-linge à tambour selon l'une des revendications 5 à 8, caractérisé par le fait que les entraîneurs ont une forme de toit en bâtière et la face du toit (26) ne comporte pas de trous sur le côté du système d'écope (20), tandis que l'autre face de toit est munie de trous (trous d'arrosage) dans la région du sommet et ne comporte pas de trous dans la région de la base du toit.

# Fig. 1

# Fig. 2

# Fig. 3

# Fig. 4

Fig. 5

Fig. 6